**Europäisches Patentamt**

**European Patent Office**

**Office européen des brevets**

(19)

(11) Numéro de publication : **0 405 665 B1**

(12) **FASCICULE DE BREVET EUROPEEN**

(45) Date de publication du fascicule du brevet :
07.10.92 Bulletin 92/41

(51) Int. Cl.⁵ : **A01G 3/03**

(21) Numéro de dépôt : **90201640.1**

(22) Date de dépôt : **22.06.90**

(54) **Echenilloir.**

(30) Priorité : **28.06.89 BE 8900710**

(43) Date de publication de la demande :
**02.01.91 Bulletin 91/01**

(45) Mention de la délivrance du brevet :
**07.10.92 Bulletin 92/41**

(84) Etats contractants désignés :
**BE DE FR SE**

(56) Documents cités :
**EP-A- 0 278 838**
**DE-C- 650 962**
**FR-A- 2 288 453**
**US-A- 2 975 518**

(73) Titulaire : **NEVE DE MEVERGNIES, Marcel**
**La Pasture**
**B-6120 Marbaix-la-Tour (BE)**

(72) Inventeur : **NEVE DE MEVERGNIES, Marcel**
**La Pasture**
**B-6120 Marbaix-la-Tour (BE)**

(74) Mandataire : **Claeys, Pierre et al**
**Bureau Gevers rue de Livourne 7 Bte 1**
**B-1050 Bruxelles (BE)**

EP 0 405 665 B1

Jouve, 18, rue Saint-Denis, 75001 PARIS

## Description

La présente invention est relative à un échenilloir pour couper des branches, hors de portée de la main, d'un arbre, comprenant une cisaille formée de deux lames coopérant entr'elles, fixée au sommet d'un manche et des moyens pour commander la cisaille, l'une des lames étant fixe, l'autre étant mobile.

Un tel échenilloir est connu par le document FR-A-2288453.

Les échenilloirs connus de ce type présentent un inconvénient sérieux. En effet, la progression de la coupe dans une branche se fait en remontant, et, les lames de la cisaille se coincent souvent dans la branche, surtout lorsque celle-ci présente un diamètre relativement important et est assez longue. Si on augmente la force sur la cisaille pour surmonter le blocage, on risque de détériorer sérieusement l'échenilloir.

Un des buts essentiels de la présente invention est de procurer un échenilloir du type défini ci-dessus qui ne présente pas cet inconvénient et avec lequel on peut en outre couper une branche sans que celle-ci ne tombe avant que la coupe soit presque ou complètement achevée, de manière à ce qu'à l'endroit de la coupe l'écorce ne puisse se déchirer et laisser ainsi une blessure nuisible et inesthétique.

A cet effet, l'échenilloir selon l'invention est caractérisé en ce que les lames sont agencées l'une par rapport à l'autre et par rapport au manche de manière à ce que lors de la coupe d'une branche (4), le centre de coupe de la lame mobile dans la branche, comme défini ci-dessous, progresse, dans une phase initiale, obliquement de haut en bas, et, dans une phase finale, suivant une direction formant avec l'horizontale un angle de tout au plus 10° vers le haut, et de préférence de tout au plus 5° vers le haut, lorsque le manche est en position sensiblement verticale.

D'autres avantages et particularités de l'invention ressortiront plus clairement de la description d'une forme de réalisation particulière d'un échenilloir selon l'invention, donnée ci-après à titre d'exemple non limitatif avec référence à la figure annexée, qui est une vue latérale de la partie supérieure.

L'échenilloir selon l'invention, tel que représenté schématiquement à la figure, comprend une cisaille 1, un long manche 2, sur une des extrémités duquel est montée la cisaille, et des moyens de commande 3 pour manoeuvrer la cisaille 1 à partir de l'autre extrémité du manche 2.

La cisaille 1 comporte une lame fixe concave 5 solidaire d'un manchon 6 serré sur l'extrémité supérieure du manche 2. Cette lame 5 présente la forme d'un crochet, pour que celle-ci puisse être accrochée à la branche à couper 4. Pour faciliter cet accrochage, l'extrémité libre 7 de la lame fixe 5 est courbée légèrement vers l'extérieur.

Une lame mobile 8 présentant un tranchant 9 est montée à pivotement contre une des faces de la lame fixe 5 au moyen d'un pivot 10 s'étendant à travers cette dernière.

Un bras 11 est fixé de l'autre côté de la lame 5 à ce pivot 10 et est rendu solidaire de la lame mobile 8 au moyen d'une tige 12. La lame fixe 5 est donc située entre le bras 11 et la lame mobile 8. Elle présente sur son contour extérieur une épaule verticale 13 et une épaule horizontale 14, qui servent de butée pour limiter le pivotement du bras 11 et de la lame mobile 8 autour du pivot 10, entre une position ouverte et une position fermée de la cisaille.

Le bras 11 est courbé et est dirigé, dans la position ouverte, obliquement vers le haut. Une poulie supérieure 15 est attachée à l'extrémité libre de ce bras, tandis qu'une poulie inférieure 16 est fixée à un oeillet 17 solidaire du manchon 6. Une corde 18, attachée à l'extrémité libre du bras 11, est d'abord guidée autour de la poulie inférieure 16 et ensuite autour de la poulie supérieure 15, de sorte qu'un palan de charge est réalisé.

En agissant sur la corde 18, le bras 11 et la lame mobile 8 pivotent autour de l'axe 10 suivant le sens de la flèche 19 jusqu'à ce que la tige 12 entre en contact avec l'épaule horizontale 14 et l'échenilloir est amené dans la position fermée.

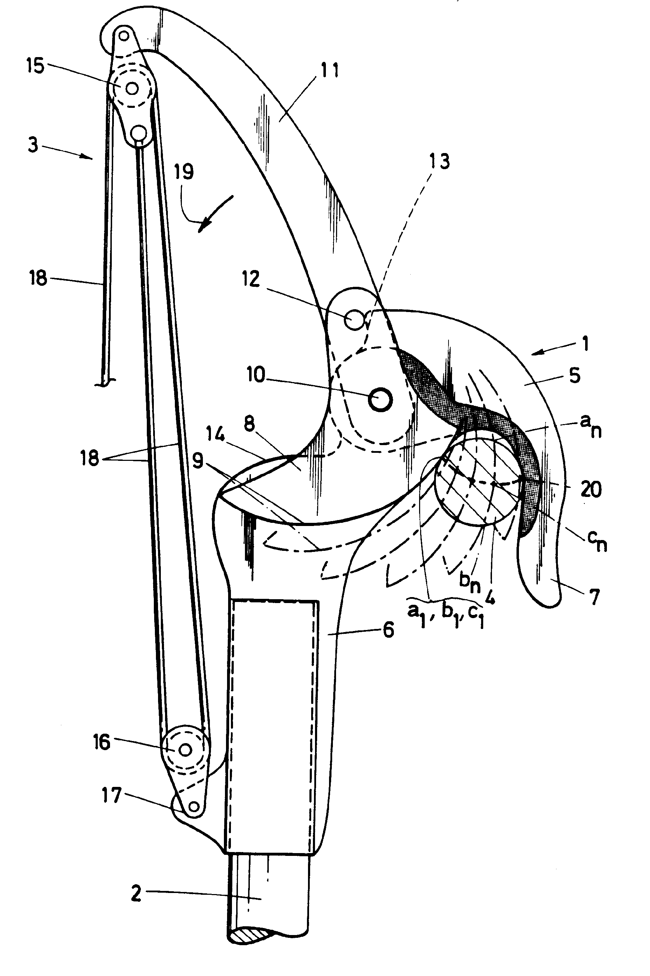

Pour ramener le bras 11 dans la position ouverte lorsque la traction sur la corde 18 est relâchée, on prévoit un ressort de rappel du côté du levier 11. Ce ressort de rappel n'est pas montré dans la figure 1, étant caché par les pièces 5, 8 et 11.

La lame mobile 8 et la lame fixe 5 ont une forme appropriée permettant une coupe facile, ce qui est déjà bien connu en soi pour des cisailles et des sécateurs. On peut, par exemple, donner au tranchant 9 de la lame mobile 8 une forme correspondant approximativement soit à une spirale d'Archimède, soit à une ellipsoïde.

Suivant l'invention, il est important que les lames 5, 8 soient agencées l'une par rapport à l'autre et par rapport au manche 2 de manière à ce que le centre de coupe de la lame mobile 8 dans la branche 4 progresse, dans une phase initiale, obliquement de haut en bas et, dans une phase finale suivant une direction formant, avec l'horizontale, avantageusement un angle de tout au plus 10° vers le haut et de préférence de tout au plus 5° vers le haut, de manière donc à réaliser, dans cette phase finale, une coupe oblique de bas vers le haut permettant d'obtenir ainsi une coupe bien nette de l'écorce.

Par centre de coupe de la lame mobile 8 dans la branche 4, il y a lieu d'entendre, dans la présente description, le milieu de la portion du tranchant 9 engagé dans une branche 4, de section circulaire, pendant l'opération de coupe de celle-ci. Au moment où la lame mobile 8 attaque la branche 4, la portion du tranchant 9 est formé par un point de tangence $a_1b_1$ du tranchant 9 avec la branche 4 de sorte que le centre

de coupe $C_1$ coïncide avec ce point. Lors de la progression de la coupe dans la branche 4, c'est-à-dire lorsque le tranchant 9 de la lame 8 pénètre dans la branche 4, cette lame 8 occupe dans cette dernière une succession de positions intermédiaires et détermine des points de coupe $a_nb_n$ avec la périphérie de la branche 4 définissant ainsi la portion précitée du tranchant 9 engagée dans celle-ci. Le centre de coupe $c_n$ est alors formé par le milieu du segment de courbe $a_nb_n$. Le lieu géométrique de ce centre de coupe pour des positions successives de la lame mobile 8 forme une courbe continue 20, indiquée en traits mixtes sur la figure. La direction de progression du centre de coupe est donc la tangente à cette courbe 20 en cette position.

Dans la forme de réalisation de l'échenilloir montrée à la figure la tangente à la courbe 20 forme, dans la phase initiale, un angle situé entre 30 et 40° avec l'horizontale, tandis qu'après que la moitié de la section de la branche 4 soit coupée, cette tangente se trouve dans une position sensiblement horizontale.

Ladite condition de progression de la coupe doit être remplie en particulier lorsque le diamètre de la branche 4 approche le diamètre maximal déterminé par les dimensions de la cisaille 1, car pour des branches d'un diamètre plus petit il n'y a généralement pas de problèmes de coincement.

On a constaté que l'invention est surtout intéressante pour couper des branches 4 d'un diamètre situé approximativement entre 3 et 4 cm. Pour des branches 4 de plus de 4 cm de diamètre, un échenilloir ne convient généralement plus et il faut utiliser, par exemple, une scie égoïne.

Un avancement de la coupe tel que décrit ci-dessus procure des avantages considérables, notamment lors de la coupe d'une branche 4 relativement grosse. Au début, la coupe de la branche 4 a lieu en oblique de haut en bas, de sorte que cette coupe devient plus facile au fur et à mesure de sa progression. A la fin, la coupe progresse dans une direction sensiblement horizontale, ce qui implique que le tranchant 9 de la lame mobile 8 se trouve dans une position sensiblement verticale.

Etant donné que la courbe 20 définiée par les centres de coupe successives du tranchant 9 présente une forme continue la transition entre la position de ce dernier par rapport à la branche 4 dans la phase initiale et celle dans la phase finale a lieu d'une manière progressive.

Par conséquent, pendant la coupe et même pendant la phase finale de la coupe, les deux parties de la branche 4 restent-réunies l'une à l'autre aussi bien du côté supérieur que du côté inférieur. Ceci est très important étant donné que la liaison restante empêche d'une part l'affaissement de la branche 4 et donc le coincement de la lame mobile 8, et d'autre part une chute prématurée de la branche 4 qui pourrait produire une blessure de l'arbre à l'endroit de la coupe.

Dans la phase finale, ces deux liaisons sont donc coupées presque simultanément.

La présente invention n'est nullement limitée à la forme d'exécution décrite ci-dessus à titre d'exemple, mais on peut y apporter plusieurs modifications, par exemple quant à la forme, au nombre et à la disposition des divers éléments utilisés sans sortir du cadre de l'invention tel que défini par les revendications.

Par exemple, pour couper une branche au ras du fût, on doit placer la lame mobile contre le tronc car l'épaisseur globale de la lame fixe et du bras et éventuellement du ressort de rappel empêche, dans la position inverse, une telle coupe.

Avec l'échenilloir, illustré à la figure, l'opérateur, regardant l'arbre de face, peut tenir le manche de la main gauche et actionner la corde de la main droite, ce qui est très approprié pour une personne droitière.

Afin que l'échenilloir soit ajusté à une personne gauchère, une forme d'exécution inversée peut être réalisée dans laquelle on peut tenir le manche de la main droite et la corde de la main gauche.

## Revendications

1. Echenilloir pour couper des branches hors de portée de la main, d'un arbre, comprenant une cisaille (1) fixée au sommet d'un manche (2) et des moyens pour commander la cisaille (1), cette dernière comportant deux lames (5,8) qui coopèrent entre elles permettant de couper une branche (4) l'une des lames (5) étant fixe par rapport au manche (2), l'autre (8) étant mobile, caractérisé en ce que les lames (5,8) sont agencées l'une par rapport à l'autre et par rapport au manche (2) de manière à ce que lors de la coupe d'une branche (4), le centre de coupe de la lame mobile (8), dans la branche (4), c'est à dire le point milieu du segment de coupe engagé dans la branche (4) progresse, dans une phase initiale, obliquement de haut en bas, et dans une phase finale suivant une direction formant avec l'horizontale un angle de tout au plus 10° vers le haut et de préférence tout au plus 5° vers le haut, lorsque le manche (2) est en position sensiblement verticale.

2. Echenilloir suivant l'une ou l'autre des revendications 1 ou 2, caractérisé en ce que les lames (5,8) sont agencées l'une par rapport à l'autre et par rapport au manche (2) de manière à ce que le centre de coupe d'une des lames (5,8) dans la branche (4) progresse, dans la phase intiale, obliquement de haut en bas suivant une direction formant un angle situé entre 30 et 40° avec l'horizontale lorsque le manche (2) est en position sensiblement verticale.

3. Echenilloir suivant l'une quelconque des revendications 1 à 3, caractérisé en ce que les lames (5, 8) sont agencées l'une par rapport à l'autre et par rapport au manche (2) de manière à ce que le centre de coupe d'une des lames (5, 8) dans la branche (4) progresse, après qu'au moins trois quarts de la section de la branche (4) soit coupée, suivant une direction formant un angle de tout au plus 10° et de préférence de tout au plus 5° avec l'horizontale, lorsque le manche (2) est en position sensiblement verticale.

4. Echenilloir suivant l'une quelconque des revendications 1 à 4, caractérisé en ce que les lames (5,8) sont agencées l'une par rapport à l'autre et par rapport au manche (2) de manière à ce que le centre de coupe d'une des lames (5,8) dans la branche (4) progresse, après qu'au moins la moitié de la section de la branche (4) soit coupée, suivant une direction formant un angle de tout au plus 10° et de préférence de tout au plus 5° avec l'horizontale, lorsque le manche (2) est en position sensiblement verticale.

5. Echenilloir suivant l'une quelconque des revendications 1 à 5, caractérisé en ce qu'une des deux lames (5,8) est une contre-lame fixe (5) par rapport au manche (2), tandis que l'autre est une lame mobile (8).

6. Echenilloir suivant la revendication 6, caractérisé en ce que la lame mobile (8) peut pivoter autour d'un axe (10) par rapport à la contre-lame (5).

7. Echenilloir suivant la revendication 7, caractérisé en ce qu'un bras (11) est fixé sur la lame mobile (8) formant un levier (11) coopérant avec les moyens de commande.

8. Echenilloir suivant la revendication 8, caractérisé en ce que les moyens de commande comprennent un lien souple (18) attaché à l'extrémité libre du bras (11) et guidé autour de poulies (15, 16) faisant office de palan.

9. Echenilloir suivant l'une quelconque des revendications 6 à 9, caractérisé en ce que la lame mobile (8) est convexe, tandis que la contre-lame (5) est concave formant un crochet pouvant être accroché à la branche à couper.

## Claims

1. A pruning implement for cutting tree branches which are out of arm's reach, comprising shears (1) fixed at the top of a handle (2) and means for actuating the shears (1), the latter comprising two blades (5, 8) which co-operate with each other to enable a branch (4) to be cut, one of the blades (5) being fixed in relation to the handle (2) and the other (8) being movable, characterised in that the blades (5, 8) are arranged relative to each other and relative to the handle (2) in such a way that when a branch (4) is being cut the cutting centre of the movable blade (8) in the branch (4), namely the middle point of the cutting segment engaged in the branch (4), advances, in an initial stage, obliquely downwards and, in a final stage, in a direction forming with the horizontal at the very most an angle of 10° upwards and, preferably, at the very most 5° upwards when the handle (2) is in a substantially vertical position.

2. A pruning implement according to claim 1, characterised in that the blades (5, 8) are arranged relative to each other and relative to the handle (2) in such a way that the cutting centre of one of the blades (5, 8) in the branch (4) advances, in the initial stage, obliquely downwards in a direction forming an angle of between 30 and 40° with the horizontal when the handle (2) is in a substantially vertical position.

3. A pruning implement according to either claim 1 or claim 2, characterised in that the blades (5, 8) are arranged relative to each other and relative to the handle (2) in such a way that the cutting centre of one of the blades (5, 8) in the branch (4) advances, after at least three quarters of the cross-section of the branch (4) has been cut, in a direction forming at the very most an angle of 10° and, preferably, at the very most 5° with the horizontal when the handle (2) is in a substantially vertical position.

4. A pruning implement according to any one of claims 1 to 3, characterised in that the blades (5, 8) are arranged relative to each other and relative to the handle (2) in such a way that the cutting centre of one of the blades (5, 8) in the branch (4) advances, after at least half of the cross-section of the branch (4) has been cut, in a direction forming at the very most an angle of 10° and, preferably, at the very most 5° with the horizontal when the handle (2) is in a substantially vertical position.

5. A pruning implement according to any one of claims 1 to 4, characterised in that one of the two blades (5, 8) is a counter-blade (5) which is fixed in relation to the handle (2), whereas the other blade is a movable blade (8).

6. A pruning implement according to claim 5, characterised in that the movable blade (8) can pivot relative to the counter-blade (5) about an axis (10).

7. A pruning implement according to claim 6, characterised in that an arm (11) is fixed to the movable blade (8) to form a lever (11) co-operating with the actuating means.

8. A pruning implement according to claim 7, characterised in that the actuating means comprise a flexible connection (18) secured to the free end of the arm (11) and guided around pulleys (15, 16) which act as a pulley block.

9. A pruning implement according to any one of claims 6 to 8, characterised in that the movable blade (8) is convex, whereas the counter-blade (5) is concave so as to form a hook which can hook on the branch to be cut.

**Patentansprüche**

1. Baumschere zum Schneiden von Zweigen eines Baumes, die sich außerhalb der Handreichweite befinden, mit einer Schere (1), die an der Spitze einer Stange (2) befestigt ist, und Vorrichtungen zum Betätigen der Schere (1), wobei letztere zwei Schneiden (5, 8) umfassen, die miteinander zusammenwirken und ermöglichen, einen Zweig (4) abzuschneiden, wobei eine der Schneiden (5) bezüglich der Stange (2) fest und die andere (8) beweglich ist, dadurch gekennzeichnet, daß die Schneiden (5, 8) gegeneinander und bezüglich der Stange (2) so bewegt werden, daß beim Schneiden eines Zweiges (4) der Mittelpunkt des Schnittes der beweglichen Schneide (8) in dem Zweig (4), das heißt der Mittelpunkt des in dem Zweig (4) befindlichen Schneidesegments, sich in einer Anfangsphase schräg von oben nach unten vorwärts bewegt und in einer Endphase einer Richtung folgt, die mit der Horizontalen einen Winkel von höchstens 10° und vorzugsweise von 5° nach oben bildet, während sich die Stange in einer im wesentlichen vertikalen Position befindet.

2. Baumschere nach Anspruch 1, dadurch gekennzeichnet, daß die Schneiden (5, 8) gegeneinander und bezüglich der Stange (2) so bewegt werden, daß der Mittelpunkt des Schnittes einer der Schneiden (5, 8) in dem Zweig (4) sich in einer Anfangsphase schräg von oben nach unten vorwärts bewegt und einer Richtung folgt, die mit der Horizontalen einen Winkel zwischen 30 und 40° bildet, während sich die Stange in einer im wesentlichen vertikalen Position befindet.

3. Baumschere nach einem der Ansprüche 1 bis 2, dadurch gekennzeichnet, daß die Schneiden (5, 8) gegeneinander und bezüglich der Stange (2) so bewegt werden, daß der Mittelpunkt des Schnittes einer der Schneiden (5, 8) in dem Zweig (4) sich nach einem Schnitt von wenigstens drei Vierteln des Zweiges (4) einer Richtung folgt, die mit der Horizontalen einen Winkel von höchstens 10° und von vorzugsweise höchstens 5° bildet, während sich die Stange in einer im wesentlichen vertikalen Position befindet.

4. Baumschere nach einem der Ansprüche 1 bis 3, dadurch gekennzeichnet, daß die Schneiden (5, 8) gegeneinander und bezüglich der Stange (2) so bewegt werden, daß der Mittelpunkt des Schnittes einer der Schneiden (5, 8) in dem Zweig (4) sich nach einem Schnitt von wenigstens der Hälfte des Zweiges (4) einer Richtung folgt, die mit der Horizontalen einen Winkel von höchstens 10° und von vorzugsweise höchstens 5° bildet, während sich die Stange in einer im wesentlichen vertikalen Position befindet.

5. Baumschere nach einem der Ansprüche 1 bis 4, dadurch gekennzeichnet, daß eine der beiden Schneiden (5, 8) eine bezüglich der Stange (2) feste Gegenschneide (5) ist, während die andere eine bewegliche Schneide (8) ist.

6. Baumschere nach Anspruch 5, dadurch gekennzeichnet, daß die bewegliche Schneide (8) sich um eine Achse (10) bezüglich der Gegenschneide (5) drehen kann.

7. Baumschere nach Anspruch 6, dadurch gekennzeichnet, daß ein Arm (11) auf der beweglichen Schneide (8) befestigt ist und einen Hebel (11) bildet, der mit den Betätigungsvorrichtungen zusammenarbeitet.

8. Baumschere nach Anspruch 7, dadurch gekennzeichnet, daß die Betätigungsvorrichtungen ein elastisches Verbindungsteil (18) umfassen, das an dem freien Ende des Armes (11) befestigt ist und um Rollen (15, 16) geführt wird, die die Aufgabe eines Flaschenzugs übernehmen.

9. Baumschere nach einem der Ansprüche 5 bis 8, dadurch gekennzeichnet, daß die bewegliche Schneide (8) konvex ist, während die Gegenschneide (5) konkav ist und einen Haken bildet, der an den zu schneidenden Zweig gehängt werden kann.